# EUROPÄISCHE PATENTSCHRIFT

(11) **EP 1 018 360 B1**
(45) Veröffentlichungstag und Bekanntmachung des Hinweises auf die Patenterteilung: **02.07.2003**
(21) Anmeldenummer: 99811059.7
(22) Anmeldetag: 17.11.1999
(51) Int. Cl.: B01D 53/18, B01D 3/32, B01J 19/32, B01J 19/00

(54) **Verfahren und Vorrichtung zum Einspeisen eines Fluids in eine Kolonne**
Method and apparatus for feeding a fluid into a column
Méthode et dispositif pour introduire un fluide dans une colonne

(30) Priorität: 15.12.1998 EP 98811227
(43) Veröffentlichungstag der Anmeldung: 12.07.2000
(73) Patentinhaber: Sulzer Chemtech AG, 8404 Winterthur (CH)
(72) Erfinder: Moser, Felix, 8408 Winterthur (CH)
(74) Vertreter: Sulzer Management AG

(56) Entgegenhaltungen:
- DE-A- 2 636 374
- DE-A- 4 024 588
- US-A- 5 632 933
- US-A- 5 648 022
- PATENT ABSTRACTS OF JAPAN vol. 004, no. 144 (C-027), 11. Oktober 1980 (1980-10-11) & JP 55 092125 A (BABCOCK HITACHI KK), 12. Juli 1980 (1980-07-12)

## Beschreibung

Die Erfindung betrifft ein Verfahren zum Einspeisen eines Fluids in eine Kolonne oder kolonnenartige Einrichtung gemäss Oberbegriff von Anspruch 1 sowie eine Kolonne, in der das Verfahren ausführbar ist.

In Gegenstromkolonnen, die Einbauten zum Durchführen eines Wärmeund/oder Stoffaustauschs zwischen einer Flüssigkeit und einem Gas enthalten, muss das Gas unterhalb den Einbauten so eingespeist werden, dass es möglichst gleichmässig nach oben in die Einbauten einströmt. Dazu können verschiedene bekannte Massnahmen - allein oder in Kombination - vorgesehen werden, die aber Nachteile aufweisen. Diese Massnahmen betreffen die Stellen, an denen das Gas zugeführt wird, und die Form, wie dies durchgeführt wird: 1. Im Raum zwischen der Gaseinspeisestelle und den Einbauten findet eine Beruhigung der Strömung statt. Die Wahl einer ausreichend grossen Beruhigungshöhe wäre an sich vorteilhaft, ist aber aus verschiedenen Gründen - beispielsweise wegen hohen Kosten oder Platzproblemen - oft nicht möglich. 2. Niedrige Einströmgeschwindigkeiten des eingespeisten Gases führen zu einer raschen Beruhigung der Strömung. Sie lassen sich mit einer Vielzahl von Einspeiserohren und/oder grossen Durchmessern der Einspeiserohre erreichen, sind aber wieder aus den bereits genannten Gründen in der Regel nicht realisierbar. 3. Besondere Konstruktionen, die eine gleichmässige Gasverteilung ermöglichen, sind aufwendig und daher teuer und/oder erzeugen hohe Druckverluste, so dass Niederdruckanwendungen (Druck in der Regel kleiner als 100 mbar) nicht in Frage kommen.

Es ist ein einfacher Gasverteiler bekannt (Prospekt Sulzer Chemtech AG, 1992, "Mellatech™ Kolonneneinbauten"), der als Umlenkeinheit auf den eingespeisten Gasstrom einwirkt. Diese Umlenkeinheit enthält eine Prallplatte, die - vertikal vor der Einmündung des Einspeiserohrs angeordnet - durch zwei horizontale Platten ober- und unterhalb der Einmündung mit der Kolonnenwand verbunden ist. Mit einer solchen Umlenkeinheit ergibt sich ein Verteilverfahren, bei dem zwei Teilströme gebildet werden, die weitgehend spiegelsymmetrisch entlang der Innenwand der Kolonne strömen und anschliessend nach einem Wiedervereinen einen rückfliessenden Strom bilden, dessen horizontale Geschwindigkeitskomponente radial zur Umlenkeinheit gerichtet ist. Dieser rückfliessende Strom macht eine relativ grosse Höhe des Beruhigungsraums über der Umlenkeinheit erforderlich.

Es ist Aufgabe der Erfindung, ein Verfahren zu schaffen, bei dem mit einer einfachen Umlenkeinheit eine verbesserte Verteilung eines Gases oder eines anderen Fluids möglich ist. Diese Verteilung soll in einer Kolonne erfolgen oder in einer kolonnenartigen Einrichtung, wie beispielsweise in einem gefluteten Festbettreaktor, bei dem eine Flüssigkeit über oder unter dem Festbett zu verteilen ist. Diese Aufgabe wird durch das in Anspruch 1 definierte Verfahren gelöst.

Mit dem Verfahren wird ein Fluid in eine Einrichtung, insbesondere in eine Kolonne, eingespeist, bei der ein Einspeiserohr für das Fluid in eine Umlenkeinheit einmündet. Diese ist in einem vertikalen Abstand von Einbauten, insbesondere einer Kolonnenpackung, angeordnet. In der Umlenkeinheit werden zwei Teilströme gebildet, die weitgehend spiegelsymmetrisch entlang einer Innenwand der Einrichtung strömen und anschliessend nach einem Wiedervereinen einen rückfliessenden Strom bilden, dessen horizontale Geschwindigkeitskomponente radial zur Umlenkeinheit gerichtet ist. Mittels der Umlenkeinheit wird mindestens ein dritter Teilstrom gebildet, der radial und bezüglich dem rückfliessenden Strom der wiedervereinten Teilströme entgegengesetzt gerichtet ist. Der dritte Teilstrom ist so stark ausgebildet, dass der rückfliessende Strom weitgehend an einem Durchströmen des Kolonnenzentrums gehindert wird.

Die abhängigen Ansprüche 2 bis 3 beziehen sich auf vorteilhafte Ausführungsformen des erfindungsgemässen Verfahrens. Die Ansprüche 4 bis 10 haben eine Kolonne zum Gegenstand, in die ein Fluid nach dem erfindungsgemässen Verfahren einspeisbar ist.

Nachfolgend wird die Erfindung anhand der Zeichnungen erläutert. Es zeigen:
- Fig. 1: ausschnittsweise und im Längsschnitt eine Kolonne mit einer Umlenkeinheit für ein einzuspeisendes Gas, das mittels des erfindungsgemässen Verfahrens über den Kolonnenquerschnitt verteilbar ist,
- Fig. 2: einen Querschnitt durch dieselbe Kolonne,
- Fig. 3: ein entsprechendes Schrägbild,
- Fig. 4: eine qualitative Darstellung der Gasströmung, die sich nach dem Austritt aus der Umlenkeinheit in der Kolonne gemäss den Figuren 1 bis 3 ergibt,
- Fig. 5: eine Draufsicht auf das Strömungsbild der Fig. 4 und
- Fig. 6 - 8: weitere Ausführungsformen der Umlenkeinheit.

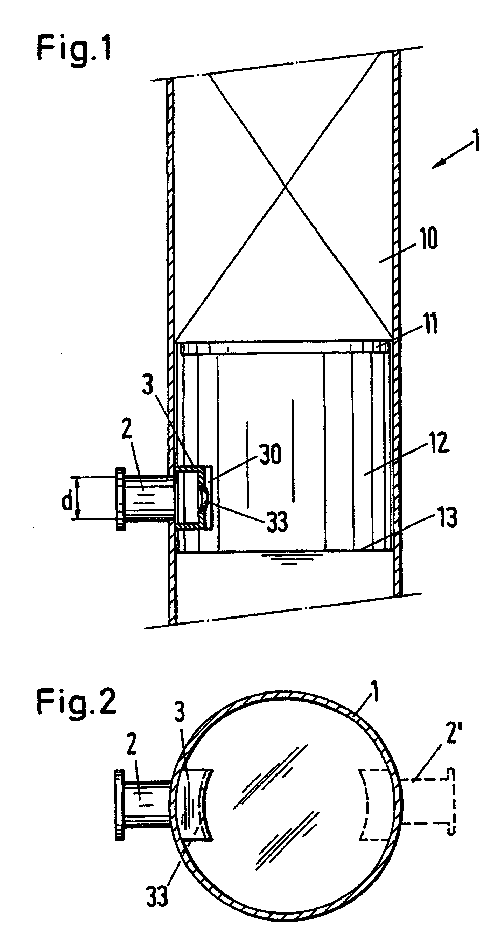

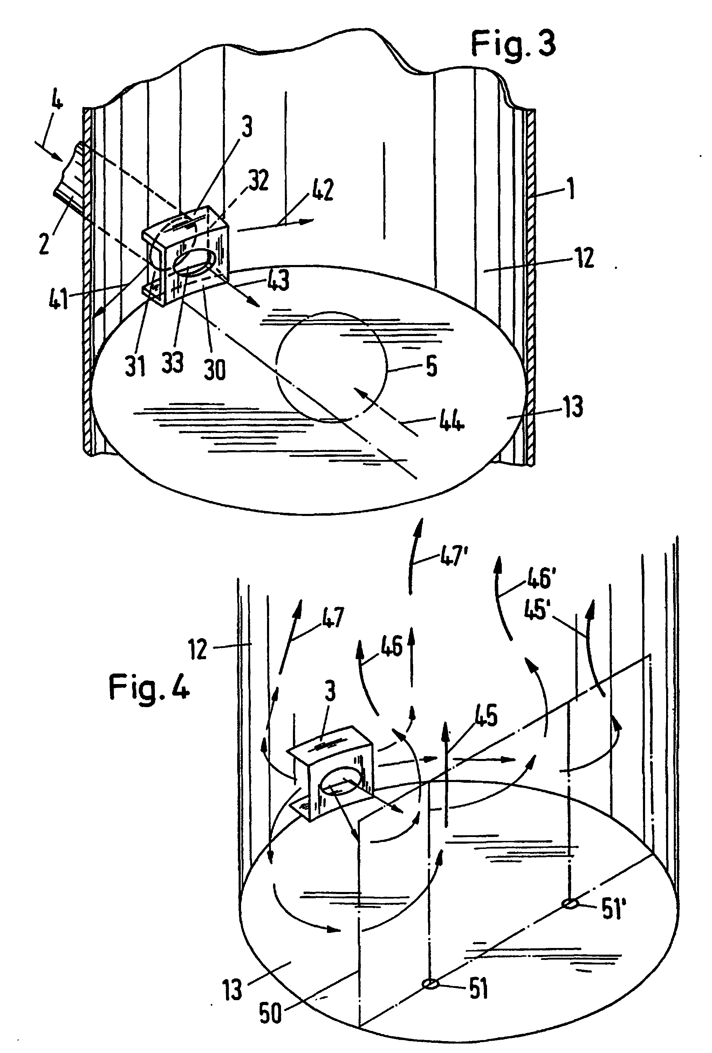

Eine Kolonne 1 gemäss den Figuren 1 bis 3 enthält Einbauten 10 beispielsweise in Form einer geordneten Packung, in der ein Gas 4 und eine Flüssigkeit in Wechselwirkung treten können und die auf einem Träger 11 montiert ist. In einen leeren Raum 12 zwischen einer Flüssigkeitsoberfläche 13 und dem Träger 11 wird das Gas 4 über ein Einspeiserohr 2 (Innendurchmesser d) und eine Umlenkeinheit 3 zugeführt. Diese Umlenkeinheit 3 ist die oben beschriebene Umlenkeinheit mit einer Prallplatte 30, in deren Zentrum ein Durchbruch 33 für den Austritt eines dritten Teilstroms 43 vorgesehen ist, wobei dieser Teilstrom 43 - siehe Fig. 3 - gemeinsam mit zwei durch seitliche Öffnungen 31 und 32 austretenden Teilströmen 41 und 42 in den Raum 12 (Beruhigungssraum) einströmt. Die beiden horizontal und entgegengesetzt gerichteten Teilströme 41 und 42 bewegen sich weitgehend spiegelsymmetrisch entlang der inneren Wandseite der Kolonne 1 und bilden anschliessend nach einem Wiedervereinen einen rückfliessenden Strom 44, dessen horizontale Geschwindigkeitskomponente radial zur Umlenkeinheit 3 gerichtet ist. Der dritte Teilstrom 43 ist radial auf den rückfliessenden Strom 44 der wiedervereinten Teilströme 41 und 42 gerichtet. Der dritte Teilstrom 43 ist dabei erfindungsgemäss so stark ausgebildet, dass der rückfliessende Strom 44 in einem Raumbereich 5 so nach oben abgelenkt wird, dass er weitgehend an einem Durchströmen des Kolonnenzentrums gehindert wird. Der dritte Teilstrom 43 wird dabei auf entsprechende Weise auch nach oben abgelenkt. Durch die gegenseitige Beeinflussung des Teilstroms 43 und des rückfliessenden Stroms 44 ergibt sich im oberen Bereich des Raums 12 ein Strömungsfeld, das im Vergleich zu einem Strömungsfeld für eine Umlenkeinheit 3 ohne Durchbruch 33 und somit ohne den Teilstrom 43 wesentlich gleichmässiger ist. Selbstverständlich darf der dritte Teilstrom 43 nicht so stark ausgebildet sein, dass die beiden ersten Teilströme 41 und 42 daran gehindert werden, die der Eintrittstelle gegenüberliegende Stelle der Kolonnenwand zu erreichen.

Der Durchbruch 33 kann beispielsweise eine kreisförmige, elliptische oder rechteckige Gestalt haben. Er kann auch mehrteilig als Brause oder Siebplatte ausgebildet sein. Der dritte Teilstrom 43 wird durch die Umlenkeinheit 3 so dosiert, dass durch alle drei Teilströme 41, 42 und 43 Impulse transportiert werden, die beim Austritt aus der Umlenkeinheit weitgehend gleich gross sind. Dabei führt der dritte Teilstrom 43 vorzugsweise einen etwas grösseren Impuls mit.

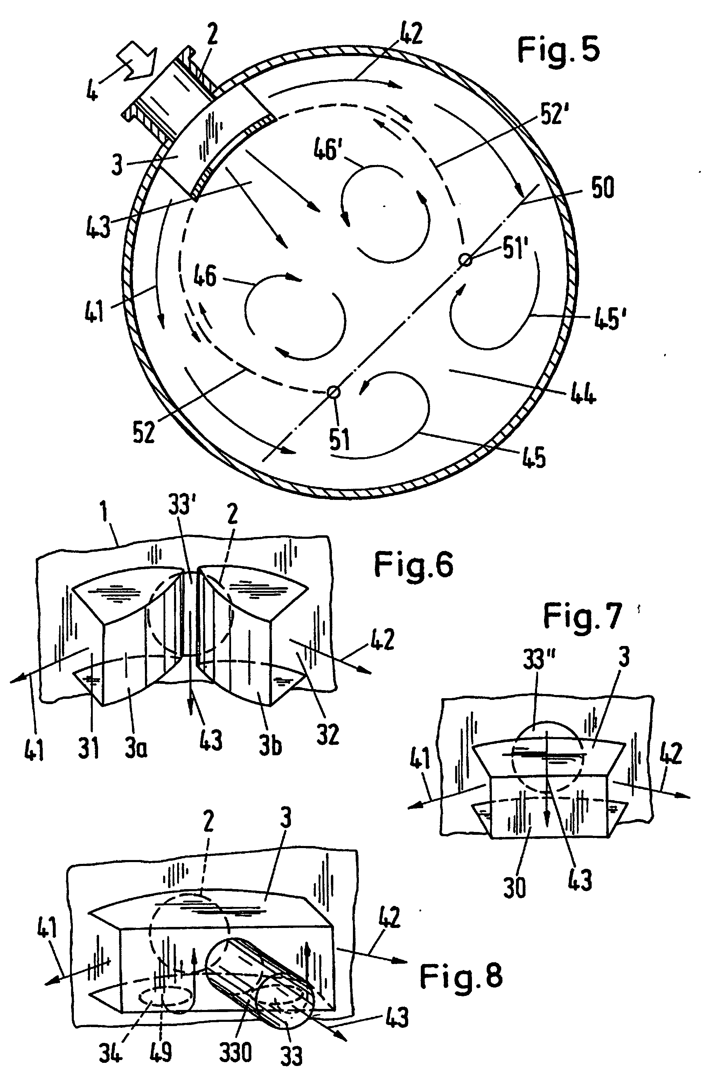

Fig. 4 ist ein Versuch, das Strömungsfeld für das erfindungsgemässe Verfahren zu veranschaulichen. Dieser Veranschaulichung liegen numerische Ergebnisse von Modellberechnungen zugrunde, die hier aber nur qualitativ wiedergegeben sind, und wobei diverse Details vernachlässigt sind. Das Strömungsfeld ist durch als Pfeilketten gezeichnete Stromlinien dargestellt. Den beiden Teilströmen 41 und 42 (Fig. 3) entsprechen die Stromlinien 45 und 47 bzw. 45' und 47', dem dritten Teilstrom 43 (Fig. 3) die Stromlinien 46 und 46'. Die obersten, fetten Pfeile haben alle ungefähr den gleichen Abstand von der Grundfläche 13. Auf der strichpunktiert dargestellten Ebene 50 befindet sich der Bereich, in dem der dritte Teilstrom 43 und der rückfliessende Strom 44 (siehe Fig. 3) aufeinander stossen. Die Vertikalen durch die Punkte 51 und 51' gehen ungefähr durch Punkte, bei denen die Stromlinien 45 und 46 bzw. 45' und 46' einander am nähesten kommen. Fig. 5 zeigt ebenfalls qualitativ das Strömungsbild der Fig. 4 in einer Draufsicht. Die dort gestrichelt eingezeichneten Linien 52, 52' geben Flächen an, bei denen sich die Richtungen der Strömungsgeschwindigkeiten kehren. Wie bereits erwähnt, sind bei der Veranschaulichung Details vernachlässigt worden: nämlich beispielsweise Gebiete des Strömungsfelds, in denen die Strömungsgeschwindigkeit nach unten gerichtet ist.

Anstelle des Gases 4 kann auch ein anderes Fluid - nämlich eine Flüssigkeit oder ein Gas/Flüssigkeits-Gemisch- mit dem erfindungsgemässen Verfahren in die Kolonne 1 eingespeist werden. Ein Gas oder ein Gas/Flüssigkeits-Gemisch wird unterhalb den Kolonneneinbauten 10 zugeführt und zwar vorzugsweise in einem Abstand, der so gross ist, dass beim Eintritt des Fluids in die Einbauten die vertikalen Komponenten der Strömungsgeschwindigkeiten über mindestens zwei Drittel des Kolonnenquerschnitts weitgehend gleich gross sind.

Erfindungsgemäss lässt die Umlenkeinheit 3 zwischen der Einmündung des Einspeiserohrs 2 und dem Kolonnenzentrum einen Durchgang 33 frei, durch den der dritte Teilstrom 43 radial in die Kolonne 1 einströmen kann. Die Figuren 6 bis 8 zeigen weitere Ausführungsformen der Umlenkeinheit 3. In Fig. 6 ist die Umlenkeinheit 3 durch zwei schaufelartige Umlenkelemente 3a und 3b gebildet, zwischen denen ein Spalt 33' direkt an der Einmündung des Einspeiserohrs 2 einen Durchlass für den dritten Teilstrom 43 freilässt. In Fig. 7 ist die Prallplatte 30 geschlossen. Hier liegt wieder ein Durchlass 33" für den dritten Teilstrom 43 direkt an der Einmündung des Einspeiserohrs 2 vor. Beim Beispiel der Fig. 8 wird der dritte Teilstrom 43 über ein Rohr 330 in die Kolonnenmitte geführt. Die Umlenkeinheit 3 kann weitere Durchbrüche aufweisen, insbesondere Durchbrüche 34, die zusätzlich Teilströme 49 unten austreten lassen.

Damit das erfindungsgemässe Verfahren eine ausreichend gute Verteilung des eingespeisten Fluids 4 ergibt, darf der Durchmesser der Kolonne 1 nicht zu gross sein. Er sollte kleiner als rund 4 m, vorzugsweise kleiner als 2 m sein. Gleichzeitig sollte der Durchmesser des Einspeiserohrs 2 bei der Einmündung einen Wert d haben, der grösser als rund 15% des Kolonnendurchmessers ist. Ferner sollte der Abstand zwischen der Oberseite der Umlenkeinheit 3 und dem Träger 11 der Einbauten 10 grösser als d sein.

Die Prallplatte 30 der Umlenkeinheit 3 ist im Ausführungsbeispiel der Figuren 1 bis 5 rechteckig; sie kann eben oder gekrümmt sein. Vorzugsweise ist die Prallplatte 30 in einem Abstand von 0,4 d bis 0,8 d vor der Mündungsstelle angeordnet (d = Durchmesser des Einspeiserohrs 2); ihre Höhe beträgt 1,2 d bis 1,5 d; die Distanz zwischen den vertikalen Seitenkanten beträgt 1,5 d bis 2 d.

Ist der Kolonnendurchmessers gross, so werden mit Vorteil zwei Einspeiserohre 2 und 2' (siehe Fig. 2) in einer diametralen Anordnung vorgesehen (mit zwei gleichen Umlenkelementen 3 bei den Mündungsstellen). Es können auch mehr als zwei derartige Einspeisestellen vorgesehen werden.

## Patentansprüche

1. Verfahren zum Einspeisen eines Fluids (4) in eine Kolonne oder kolonnenartige Einrichtung (1), bei der ein Einspeiserohr (2) für das Fluid in eine Umlenkeinheit (3) einmündet, die in einem vertikalen Abstand von Einbauten (10), insbesondere einer Kolonnenpackung, angeordnet ist, bei welchem Verfahren in der Umlenkeinheit zwei Teilströme (41, 42) gebildet werden, die weitgehend horizontal und spiegelsymmetrisch entlang einer Innenwand der Einrichtung (1) strömen und anschliessend nach einem Wiedervereinen einen rückfliessenden Strom (44) bilden, dessen horizontale Geschwindigkeitskomponente radial zur Umlenkeinheit gerichtet ist, **dadurch gekennzeichnet, dass** mindestens ein dritter Teilstrom (43) mittels der Umlenkeinheit gebildet wird, der radial und bezüglich dem rückfliessenden Strom der wiedervereinten Teilströme entgegengesetzt gerichtet ist, und dass der dritte Teilstrom so stark ausgebildet ist, dass der rückfliessende Strom weitgehend an einem Durchströmen des Kolonnenzentrums gehindert wird.

2. Verfahren nach Anspruch 1, **dadurch gekennzeichnet, dass** der dritte Teilstrom (43) durch die Umlenkeinheit (3) so dosiert wird, dass durch alle drei Teilströme (41, 42, 43) Impulse transportiert werden, die beim Austritt aus der Umlenkeinheit weitgehend gleich gross sind, wobei der dritte Teilstrom vorzugsweise einen etwas grösseren Impuls transportiert.

3. Verfahren nach nach Anspruch 1 oder 2, **dadurch gekennzeichnet, dass** das Fluid (4) ein Gas oder ein Gas/Flüssigkeits-Gemisch ist, dass das Fluid unterhalb der Einbauten (10) eingespeist wird und dass der Abstand zwischen Umlenkeinheit (3) und Einbauten so gross ist, dass beim Eintritt des Fluids in die Einbauten die vertikalen Komponenten der Strömungsgeschwindigkeiten über mindestens zwei Drittel des Einbautenquerschnitts weitgehend gleich gross sind.

4. Kolonne (1), deren Querschnitt kreisförmig ist, mit Einbauten (10) zum Durchführen eines Wärme- und/oder Stoffaustauschs zwischen zwei Fluiden unterschiedlicher Dichte, mit einem Einspeiserohr (2) für das weniger dichte Fluid (4) unterhalb den Einbauten und mit einer Umlenkeinheit (3), in die das Einspeiserohr einmündet und mittels der das eingespeiste Fluid (4) in zwei horizontal und in entgegengesetzte Richtungen abströmende Teilströme (41, 43) verzweigbar ist, **dadurch gekennzeichnet, dass** die Umlenkeinheit zwischen der Einmündung des Einspeiserohrs (2) und dem Kolonnenzentrum einen Durchgang (33) freilässt, durch den ein dritter Teilstrom (43) radial in die Kolonne einströmen kann.

5. Kolonne nach Anspruch 4, **dadurch gekennzeichnet, dass** die Umlenkeinheit (3) ihre Funktion mit einer Prallplatte (30) ausübt, die vertikal vor der Einmündung des Einspeiserohrs (2) angeordnet ist und die durch zwei horizontale Platten ober- und unterhalb der Einmündung mit der Kolonnenwand verbunden ist, und dass die Prallplatte einen zentralen Durchbruch (33) aufweist, der beispielsweise eine kreisförmige, elliptische oder rechteckige Gestalt hat oder der auch mehrteilig als Brause ausgebildet sein kann.

6. Kolonne nach Anspruch 4 oder 5, **dadurch gekennzeichnet, dass** der Kolonnendurchmessers kleiner als rund 4 m, vorzugsweise kleiner als 2 m ist, dass der Durchmesser des Einspeiserohrs (2) bei der Einmündung einen Wert d hat, der grösser als rund 15% des Kolonnendurchmessers ist, und dass der Abstand zwischen der Oberseite der Umlenkeinheit (3) und einem Träger (11) der Einbauten (10) grösser als d ist.

7. Kolonne nach den Ansprüchen 5 und 6, **dadurch gekennzeichnet, dass** die Prallplatte (30) der Umlenkeinheit (3) zumindest angenähert rechteckig ist und zwar mit vertikalen Seitenkanten sowie horizontalen Seitenkanten, die insbesondere gekrümmt sein können, dass die Prallplatte in einem Abstand von 0,4 d bis 0,8 d vor der Einmündung angeordnet ist, dass ihre Höhe 1,2 d bis 1,5 d beträgt und dass die vertikalen Seitenkanten eine Entfernung von 1,5 d bis 2 d aufweisen.

8. Kolonne nach Anspruch 4 oder 5, **dadurch gekennzeichnet, dass** eine Mehrzahl von Einspeiserohren (2, 2') mit gleichen Umlenkelementen (3) bei den Mündungsstellen vorgesehen sind.

9. Kolonne nach Anspruch 8, **dadurch gekennzeichnet, dass** zwei Einspeiserohre (2, 2') in einer diametralen Anordnung vorgesehen sind.

10. Kolonne nach einem der Ansprüche 4 bis 9, **dadurch gekennzeichnet, dass** die Umlenkeinheit (3) weitere Durchbrüche (34) aufweist, insbesondere Durchbrüche, die zusätzlich Teilströme (49) unten austreten lassen.

## Claims

1. Method for the infeed of a fluid (4) into a column or column-like apparatus (1), in which an infeed tube (2) for the fluid opens into a deflection unit (3) which is arranged at a vertical distance from installed elements (10), in particular from a column packing, in which method two partial flows (41, 42) are formed in the deflection unit which flow largely horizontally and mirror symmetrically along an inner wall of the apparatus (1) and then after a reunion form a backwardly moving flow (44), the horizontal velocity component of which is directed radially to the deflection unit,
**characterised in that** at least one third partial flow (43) is formed by means of the deflection unit which is directed radially and oppositely with respect to the backwardly moving flow of the reunited partial flows; and **in that** the third partial flow is developed so strongly that the backwardly moving flow is largely prevented from flowing through the column centre.

2. Method in accordance with claim 1, **characterised in that** the third partial flow (43) is metered by the deflection unit (3) in such a manner that all three partial flows (41, 42, 43) transport a momentum which on leaving the deflection unit are essentially equally large, with the third partial flow preferably transporting a somewhat greater momentum.

3. Method in accordance with claim 1 or claim 2, **characterised in that** the fluid (4) is a gas or a gas/liquid mixture; **in that** the fluid is fed in below the installed elements (10); and **in that** the distance between the deflection unit (3) and the installed elements is so large that on entry of the fluid into the installed elements the vertical components of the flow velocities are essentially equally large over at least two thirds of the cross-section of the installed elements.

4. Column (1), the cross-section of which is circular, comprising installed elements (10) for carrying out a heat exchange and/or a material exchange between two fluids of different density, comprising an infeed tube (2) for the less dense fluid (4) below the installed elements and comprising a deflection unit (3) into which the infeed tube opens and by means of which the fluid (4) which is fed in can be branched into two partial flows (41, 43) which flow off horizontally and in opposite directions,
**characterised in that** the deflection unit leaves a passage (33) free between the entry opening of the infeed tube (2) and the column centre through which a third partial flow (43) can flow radially into the column.

5. Column in accordance with claim 4, **characterised in that** the deflection unit (3) carries out its function with a baffle plate (30) which is arranged vertically ahead of the entry opening of the infeed tube (2) and which is connected to the column wall by two horizontal plates above and below the entry opening; and **in that** the baffle plate has a central aperture (33) which for example has a circular, elliptical or rectangular shape or which can also be designed in a plurality of parts as a shower.

6. Column in accordance with claim 4 or claim 5, **characterised in that** the column diameter is smaller than about 4 m, preferably smaller than 2 m; **in that** the diameter of the infeed tube (2) has a value d at the entry opening which is greater than about 15% of the column diameter; and **in that** the distance between the upper side of the deflection unit (3) and a carrier (11) for the installed elements (10) is greater than d.

7. Column in accordance with claims 5 and 6, **characterised in that** the baffle plate (30) of the deflection unit (3) is at least approximately rectangular and indeed with vertical side edges as well as horizontal side edges, which can also be curved; **in that** the baffle plate is arranged at a distance of from 0.4 d to 0.8 d ahead of the entry opening; **in that** its height amounts to from 1.2 d to 1.5 d; and **in that** the vertical side edges have a separation of from 1.5 d to 2 d.

8. Column in accordance with claim 4 or claim 5, **characterised in that** a plurality of infeed tubes (2, 2') with similar deflection units (3) are provided at the entry opening points.

9. Column in accordance with claim 8, **characterised in that** two infeed tubes (2, 2') are provided in a diametral arrangement.

10. Column in accordance with one of the claims 4 to 9, **characterised in that** the deflection unit (3) has further apertures (34), in particular apertures which allow partial flows (49) to emerge at the bottom in addition.

## Revendications

1. Procédé pour introduire un fluide (4) dans une colonne ou un dispositif analogue à une colonne (1), pour lequel un tuyau d'alimentation (2) pour le fluide débouche dans une unité de déviation (3), qui est disposée à une certaine distance verticale des éléments intérieurs (10), en particulier d'un garnissage de la colonne, pour lequel procédé deux courants partiels (41 et 42) sont formés dans l'unité de déviation, courants qui s'écoulent dans une large mesure horizontalement et symétriquement par rapport à un plan le long d'une paroi intérieure du dispositif (1), et forment ensuite après leur confluence un courant de reflux (44) dont la composante horizontale de la vitesse est dirigée radialement vers l'unité de déviation, **caractérisé en ce qu'**au moyen de l'unité de déviation est formé au moins un troisième courant partiel (43), qui est dirigé radialement et en sens opposé du courant de reflux des courants partiels réunis, et **en ce que** le troisième courant partiel est formé si fort que le courant de reflux est empêché dans une large mesure de s'écouler au-delà du centre de la colonne.

2. Procédé conformément à la revendication 1,
**caractérisé en ce que** le troisième courant partiel (43) est dosé par l'unité de déviation (3) de telle sorte que par tous les trois courants partiels (41, 42 et 43) sont transportées des quantités de mouvement qui, à la sortie de l'unité de déviation, sont dans une large mesure égales, le troisième courant partiel transportant de préférence une quantité de mouvement un peu plus grande.

3. Procédé conformément à une des revendications 1 ou 2, **caractérisé en ce que** le fluide (4) est un gaz ou un mélange gaz / liquide, **en ce que** le fluide est introduit en dessous des éléments intérieurs (10) et **en ce que** la distance entre l'unité de déviation (3) et les éléments intérieurs est telle que, lors de l'entrée du fluide dans les éléments intérieurs, la composante verticale des vitesses d'écoulement est uniforme dans une large mesure sur au moins les deux tiers de la section des éléments intérieurs.

4. Colonne (1) dont la section est circulaire, avec des éléments intérieurs (10) pour l'exécution d'un échange de chaleur et / ou de matière entre deux fluides de densités différentes, avec un tuyau d'alimentation (2) pour le fluide le moins dense (4) en dessous des éléments intérieurs et avec une unité de déviation (3), dans laquelle débouche le tuyau d'alimentation et au moyen de laquelle le fluide (4) introduit peut être ramifié en deux courants partiels (41 et 42) qui s'écoulent horizontalement et dans des sens opposés, **caractérisée en ce que** l'unité de déviation laisse une percée (33) entre l'embouchure du tuyau d'alimentation (2) et le centre de la colonne, percée par laquelle un troisième courant partiel (43) peut s'écouler radialement dans la colonne.

5. Colonne conformément à la revendication 4, **caractérisée en ce que** l'unité de déviation (3) exerce sa fonction avec une plaque de déviation (30), qui est disposée verticalement devant l'embouchure du tuyau d'alimentation (2) et qui est reliée par deux plaques horizontales au-dessus et en dessous de l'embouchure à la paroi de la colonne, et **en ce que** la plaque de déviation présente une percée (33) centrale, qui peut avoir par exemple une forme circulaire, elliptique ou rectangulaire, ou qui peut aussi être configurée en plusieurs partie à la façon d'une pomme de douche.

6. Colonne conformément à une des revendications 4 ou 5, **caractérisée en ce que** le diamètre de la colonne est plus petit que 4 m environ, de préférence plus petit que 2 m, **en ce qu'**à l'embouchure, le diamètre du tuyau d'alimentation (2) a une valeur d qui est supérieure à environ 15 % du diamètre de la colonne, et **en ce que** la distance entre la face supérieure de l'unité de déviation (3) et un support (11) des éléments intérieurs (10) est plus grande que d.

7. Colonne conformément aux revendications 5 et 6, **caractérisée en ce que** la plaque de déviation (30) de l'unité de déviation (3) est au moins approximativement rectangulaire, et ce avec des arêtes latérales verticales ainsi que des arêtes latérales horizontales qui peuvent en particulier être incurvées, **en ce que** la plaque de déviation est disposée à une distance de 0,4 d à 0,8 d devant l'embouchure, **en ce que** sa hauteur est de 1,2 d à 1,5 d et **en ce que** les arêtes latérales verticales présentent un écartement de 1,5 d à 2 d.

8. Colonne conformément à une des revendications 4 ou 5, **caractérisée en ce qu'**une pluralité de tuyaux d'alimentation (2, 2') est prévue, avec les mêmes éléments de déviation (3) à leurs embouchures.

9. Colonne conformément à la revendication 8, **caractérisée en ce que** deux tuyaux d'alimentation (2, 2') sont prévus selon une disposition diamétrale.

10. Colonne conformément à une des revendications 4 à 9, **caractérisée en ce que** l'unité de déviation (3) présente d'autres percées (34), en particulier des percées qui laissent sortir des courants partiels (49) supplémentaires vers le bas.
